# EUROPEAN PATENT APPLICATION

(11) **EP 4 686 291 A2**
(43) Date of publication of application: **28.01.2026**
(21) Application number: 24785361.7
(22) Date of filing: 08.04.2024
(51) Int. Cl.: H04W 72/12, H04W 72/04, H04W 72/231, H04W 72/232, H04L 5/14

(54) **METHOD AND DEVICE FOR SCHEDULING AT LEAST ONE UPLINK DATA CHANNEL FOR FULL-DUPLEX COMMUNICATION**

(30) Priority: 06.04.2023 KR 20230045700; 03.04.2024 KR 20240045213
(71) Applicant: KT Corporation, Seongnam-si, Gyeonggi-do 13606 (KR)
(72) Inventor: PARK, Kyujin, Seongnam-si, Gyeonggi-do 13606 (KR)
(74) Representative: BCKIP Part mbB
(86) International application number: PCT/KR2024/004602
(87) International publication number: WO 2024/210664

(57) **Abstract**

Provided are a method and apparatus for performing an operation for a physical uplink shared channel (PUSCH) transmission in a wireless communication system. A terminal receives time division duplex (TDD) configuration information, UL bandwidth part (BWP) configuration information, and UL subband configuration information from a base station. In addition, the terminal receives downlink control information (DCI) including scheduling information for at least one PUSCH transmission from the base station. Then, the terminal determines a slot for the at least one PUSCH transmission based on the received DCI.

## Description

### Technical Field

The present disclosure relates to wireless communications in 5G NR, 5G-Advanced, and 6G.

### Background Art

As more communication devices require greater data traffic, the necessity for a next generation 5G system, enhanced over legacy LTE systems, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, eMBB corresponds to a next generation mobile communication scenario having characteristics such as high spectrum efficiency, high user perceived data rate, high peak data rate, and the like. URLLC corresponds to a next generation mobile communication scenario having characteristics such as ultra-reliability, ultra-low latency, ultra-high availability, and the like (e.g., V2X, Emergency Service, Remote Control). mMTC corresponds to a next generation mobile communication scenario having characteristics such as low cost, low energy, short packet, and massive connectivity (e.g., IoT).

### Disclosure of Invention

### Technical Problem

The disclosure is to provide a method and apparatus for efficiently performing an operation to allocate at least one uplink data channel (i.e., PUSCH: physical uplink shared channel) transmission resource for full duplex communication and to perform PUSCH transmission based thereon.

### Solution to Problem

In accordance with an embodiment, a method of a terminal may be provided for operation in a wireless communication system. The method may include receiving time division duplex (TDD) configuration information, UL bandwidth part (BWP) configuration information, and UL subband configuration information from a base station and receiving downlink control information (DCI) including scheduling information for at least one PUSCH transmission from the base station. Then, the method further include determining a slot for the at least one PUSCH transmission based on the DCI. Here, the slot for the at least one PUSCH transmission is determined by whether an invalid symbol is included within a slot according to the scheduling information included in the DCI, and the invalid symbol is determined based on subband full duplex (SBFD) symbol information from the TDD configuration information and the UL subband configuration information associated with UL BWP.

In accordance with another embodiment, a communication apparatus may be provided for operation in a wireless communication system. The apparatus may include: at least one processor; and at least one memory configured to store instructions and be operably electrically connectable to the at least one processor, wherein operations performed based on the instructions executed by the at least one processor include: receiving time division duplex (TDD) configuration information, UL bandwidth part (BWP) configuration information, and UL subband configuration information from a base station. In addition, the operation may include receiving downlink control information (DCI) including scheduling information for at least one PUSCH transmission from the base station, and determining a slot for the at least one PUSCH transmission based on the DCI. Here, the slot for the at least one PUSCH transmission is determined by whether an invalid symbol is included within a slot according to the scheduling information included in the DCI, and the invalid symbol is determined based on subband full duplex (SBFD) symbol information from the TDD configuration information and the UL subband configuration information associated with UL BWP.

A PUSCH transmission may not be performed in the slot including the invalid symbol.

Meanwhile, the invalid symbol may include a non-SBFD symbol for which no UL subband is configured, among the downlink (DL) symbols according to the TDD configuration information.

In another aspect, the invalid symbol may include a symbol that is indicated and/or configured for DL reception by the base station, where the symbol is one for which a UL subband configuration is made among the downlink (DL) symbols according to the TDD configuration information.

In another aspect, the invalid symbol includes: i) a non-SBFD symbol for which a UL subband configuration is not made, among the downlink (DL) symbols according to the TDD configuration information, and ii) a symbol that is indicated and/or configured for DL reception by the base station, where the symbol is one for which a UL subband configuration is made among the downlink (DL) symbols according to the TDD configuration information, and a symbol not included in the invalid symbol may be a valid PUSCH transmission symbol.

In another aspect, the invalid symbol may refer to all non-SBFD symbols for which a UL subband configuration is not made, or all SBFD symbols for which the UL subband is configured. Here, whether PUSCH transmission is performed for the non-SBFD symbol and/or the SBFD symbol may be i) determined based on an indication through the DCI, ii) determined by a symbol type of a first PUSCH transmission by the DCI, or iii) determined by a symbol type in which the DCI is transmitted.

The DCI may have a format including i) a scheduling information area in a slot type composed of SBFD symbols, ii) a scheduling information area in a slot type composed of non-SBFD symbols, and iii) a slot type common information area.

### Advantageous Effects of Invention

According to the embodiments in the disclosure, in a wireless communication system that supports full duplex communication, at least one uplink data channel(e.g., PUSCH: physical uplink shared channel) transmission resource may be efficiently allocated, and PUSCH transmission may be performed efficiently based on the allocated at least one uplink data channel transmission resource.

### Brief Description of Drawings

FIG. 1 illustrates a wireless communication system.
FIG. 2 illustrates a structure of a radio frame used in NR.
FIGS. 3A to 3C illustrate exemplary architectures for a wireless communication service.
FIG. 4 illustrates a slot structure of a new radio (NR) frame.
FIG. 5 shows an example of a subframe type in NR.
FIG. 6 illustrates a structure of a self-contained slot.
FIGS. 7A and 7B are diagrams for showing examples of subband full duplex communication.
FIGS. 8A to 8B are diagrams for illustrating examples of configuring an uplink (UL) subband in a downlink (DL) slot according to an embodiment of the disclosure.
FIG. 9 is a flowchart illustrating an operation method of a terminal according to an embodiment.
FIG. 10 shows apparatuses according to an embodiment of the disclosure.
FIG. 11 is a block diagram showing a configuration of a terminal according to an embodiment of the disclosure.
FIG. 12 is a configuration block diagram of a processor in which the disclosure is implemented.
FIG. 13 is a detailed block diagram of a transceiver of a first apparatus shown in FIG. 10 or a transceiving unit of an apparatus shown in FIG. 11.

### Mode for the Invention

The technical terms used herein are intended to merely describe specific embodiments and should not be construed as limiting the disclosure. Further, the technical terms used herein should be, unless defined otherwise, interpreted as having meanings generally understood by those skilled in the art but not too broadly or too narrowly. Additionally, the technical terms used herein, which are determined not to exactly represent the spirit of the disclosure, should be replaced by or understood by such technical terms as being able to be exactly understood by those skilled in the art. Finally, the general terms used herein should be interpreted in the context as defined in the dictionary, but not in an excessively narrowed manner.

The expression of the singular form in the disclosure includes the meaning of the plural form unless the meaning of the singular form is definitely different from that of the plural form in the context. In the following description, the term 'include' or 'have' may represent the existence of a feature, a number, a step, an operation, a component, a part or the combination thereof described in the disclosure and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms 'first' and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts that are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to include its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features described individually in one drawing in this specification may be implemented separately or at the same time.

In the accompanying drawings, user equipment (UE) is illustrated by way of example, but the illustrated UE may be also referred to as a terminal, mobile equipment (ME), or the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (e.g., a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), a repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Wireless Communication System>

With the success of long term evolution (LTE)/LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and a minimum actual transmission rate of at least 100 Mbps anywhere. The official name of the 5^{th} generation mobile telecommunications is 'IMT-2020.'

The ITU proposes three usage scenarios, namely, enhanced Mobile Broadband (eMBB), massive Machine Type Communication (mMTC) and Ultra Reliable and Low Latency Communications (URLLC).

The URLLC relates to a usage scenario that requires high reliability and low latency. For example, services such as autonomous driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and reduce battery consumption compared to a 4G mobile communication system to better implement the Internet of things. A new radio access technology (new RAT or NR) may be proposed for such 5G mobile communication.

An NR frequency band is defined as two types of frequency ranges: FR1 and FR2. The numerical value in each frequency range may vary, and the frequency ranges of the two types FR1 and FR2 may for example be shown in Table 1 below. For convenience of description, FR1 among the frequency ranges used in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may vary in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, such as, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs that do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An reference signal (RS), also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

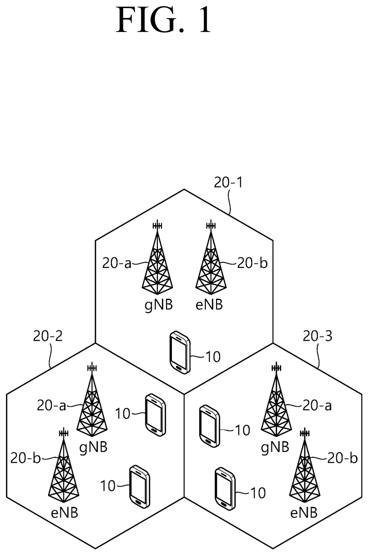

**FIG. 1** **illustrates a wireless communication system.**

Referring to FIG. 1, the wireless communication system includes at least one base station (BS). The BS includes a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be performed simultaneously. In a TDD system in which uplink transmission and downlink transmission are divided in subframe units, uplink transmission and downlink transmission are performed in different subframes.

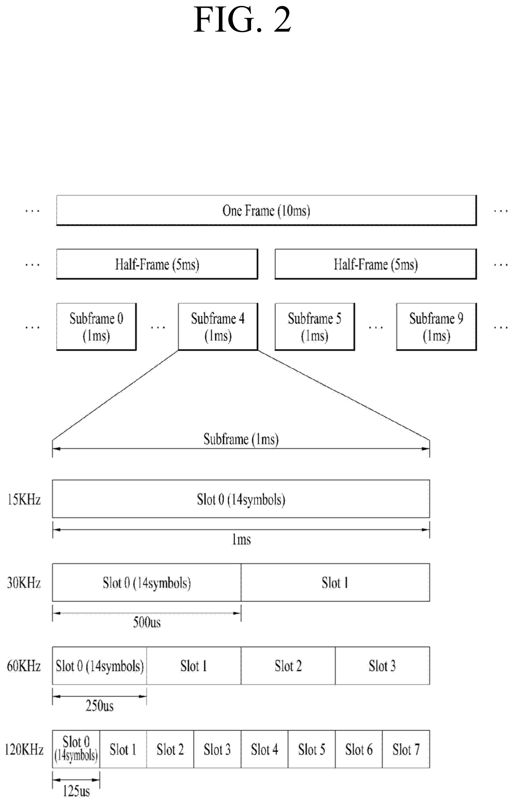

**FIG. 2** **illustrates a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

### <Support of Various Numerologies>

With the development of wireless communication technology, multiple numerologies may be available to UEs in the NR system. For example, in the case where a subcarrier spacing (SCS) is 15 kHz, a wide area of the typical cellular bands is supported. In the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a subcarrier spacing (SCS). A single cell can provide a plurality of numerologies to UEs. When an index of a numerology is represented by µ, a subcarrier spacing and a corresponding CP length may be expressed as shown in the following table.

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 4]**

| µ | SCS (15*2^{µ}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

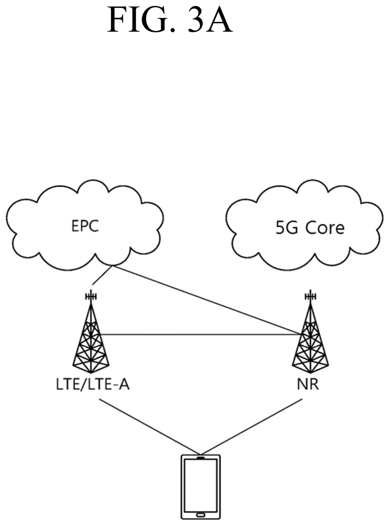

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

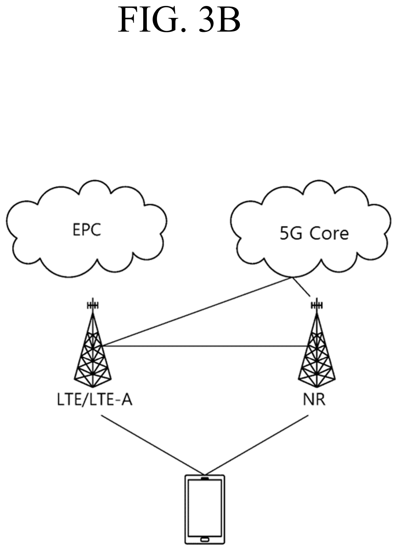

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

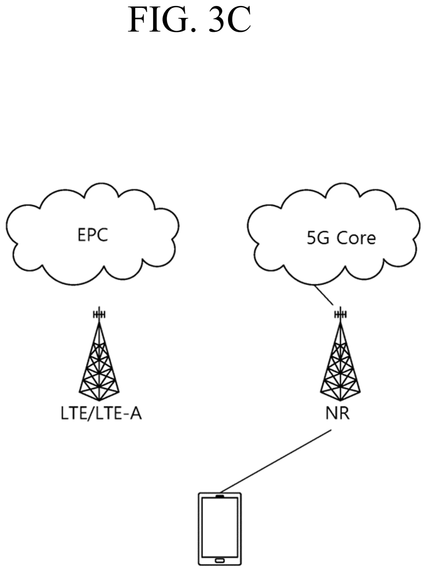

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to both paired and not-paired spectrums. A pair of spectrums indicates including two subcarriers for downlink and uplink operations. For example, one subcarrier in one pair of spectrums may include a pair of a downlink band and an uplink band.

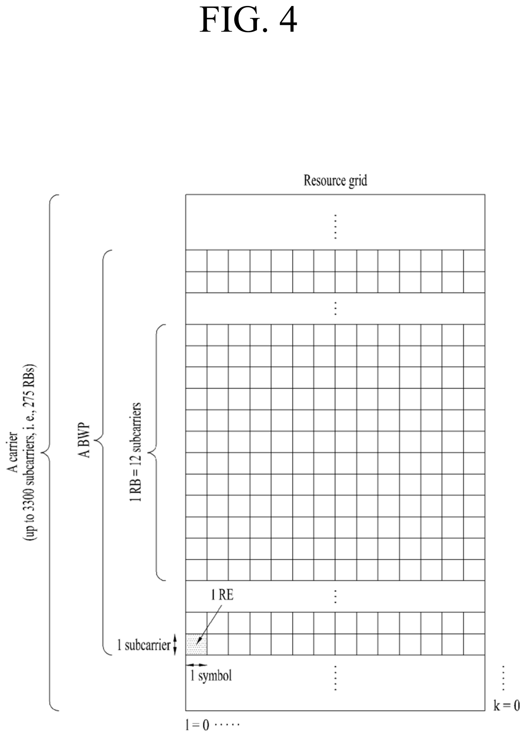

**FIG. 4** **illustrates a slot structure of an NR frame.**

A slot includes a plurality of symbols in the time domain. For example, in the case of the normal CP, one slot includes seven symbols. On the other hand, in the case of an extended CP, one slot includes six symbols. A carrier includes a plurality of subcarriers in the frequency domain. A resource block (RB) is defined as consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in both the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

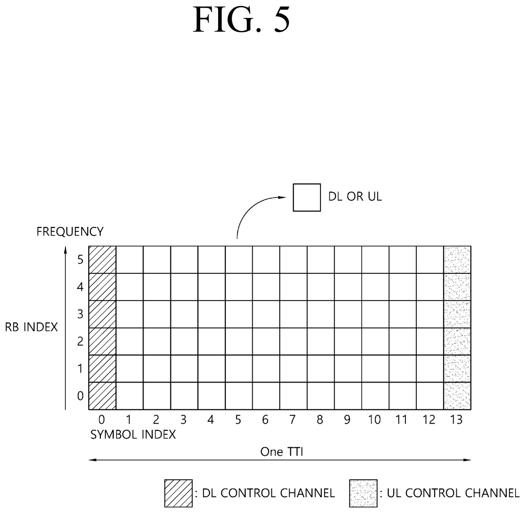

**FIG. 5** **shows an example of a subframe type in NR.**

Referring to FIG. 5, a TTI (Transmission Time Interval) may be called a subframe or a slot for NR (or new RAT). The subframe (or slot) shown in FIG. 5 can be used in a TDD system of NR (or new RAT) to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as the DL control region) in a slot may be used to transmit a DL control channel, and the last M symbols (hereinafter referred to as the UL control region) in the slot may be used to transmit a UL control channel. N and M are integers greater than 0. A resource region between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception may be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

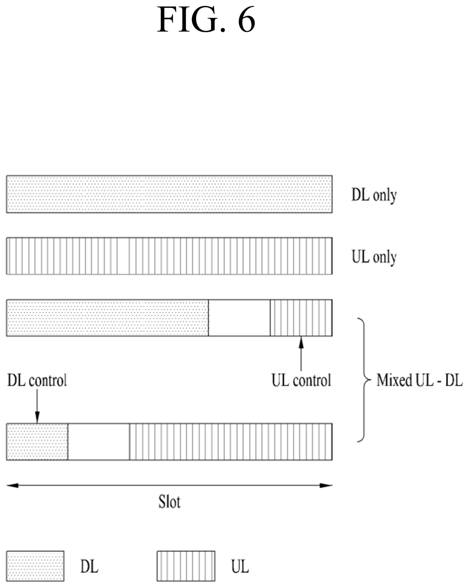

**FIG. 6** **illustrates a structure of a self-contained slot.**

In the NR system, the frame has a self-contained structure, in which all of a DL control channel, DL or UL data channel, UL control channel, and other elements are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource region between the DL control region and the UL control region (hereinafter referred to as a data region) may be used for DL data transmission or UL data transmission. For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.'

This specification proposes a resource allocation method for an uplink data channel, i.e., PUSCH transmission, of a terminal in a base station/cell where an uplink (UL) subband or a downlink (DL) subband configuration is provided to support Full Duplex in a wireless mobile communication system. In particular, when the terminal is configured to schedule one or more PUSCH transmissions via a single DCI (downlink control information), a method for supporting multiple PUSCH transmissions via an SBFD (Subband Full Duplex) slot including a UL subband and in a non-SBFD slot (e.g., a typical UL slot) is proposed.

Time Division Duplex (TDD) is a widely used duplexing method in commercial New Radio (NR), i.e., 5G mobile communication systems. In TDD, time-domain radio resources are divided into downlink slots and uplink slots, and typically, downlink slots are distributed in a greater proportion than uplink slots according to traffic distribution ratio between uplink traffic and downlink traffic. However, this limitation of uplink slots adversely affects coverage and latency. Full duplex technology has recently attracted attention as means to address this problem.

Full Duplex is a technology where a gNB, i.e., a base station, simultaneously performs DL transmission and UL reception over the same (or designated) wireless resources. A terminal may also simultaneously perform DL reception and UL transmission. That is, both the base station and the terminal may support full duplex. However, unlike a base station that has structural advantageous for self-interference cancellation the downlink reception performance of a terminal is more susceptible to self-interference from its uplink transmission signal. Therefore, a scenario in which the gNB operates in full duplex and the terminal operates in half duplex is generally considered. Furthermore, to reduce the impact of self-interference even in the gNB, a subband non-overlapping full duplex method may be primarily considered, in which the gNB simultaneously performs DL transmission and UL reception while distinguishing frequency resources for transmission and reception rather than using the same resources between DL/UL.

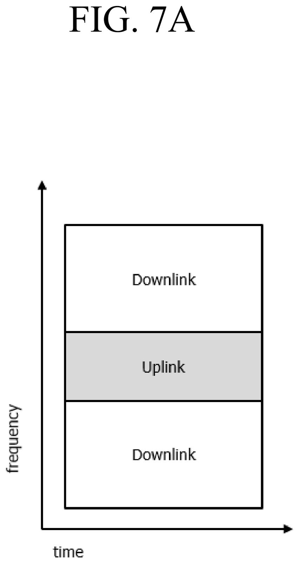

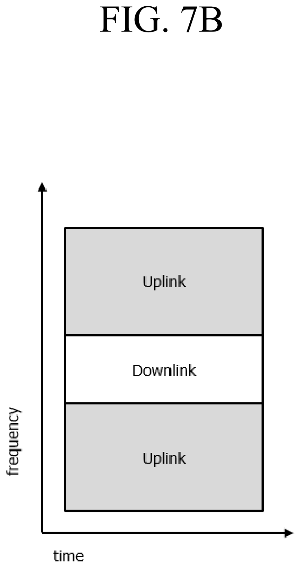

**FIGS. 7A** **and** **7B** **are diagrams illustrating schematic examples of subband full duplex communication.**

Subband full duplex may also be referred to as SBFD (subband full duplex) or FDSB (full duplex subband).

In subband full duplex, a portion of time-frequency resources on a given carrier is used for downlink, and a portion of time-frequency resources on the same carrier is used for uplink. Specifically, downlink resources and uplink resources are separated in the frequency domain and used for transmission and reception, respectively.

FIGS. 7A and 7B illustrate examples of subband full duplex. In the frequency domain, FIG. 7A illustrates an example in which an uplink subband is located between downlink subbands, and FIG. 7B illustrates an example in which a downlink subband is located between uplink subbands. Although not shown in the drawings, a guard band or guard period may be located between the downlink subband and the uplink subband to reduce interference.

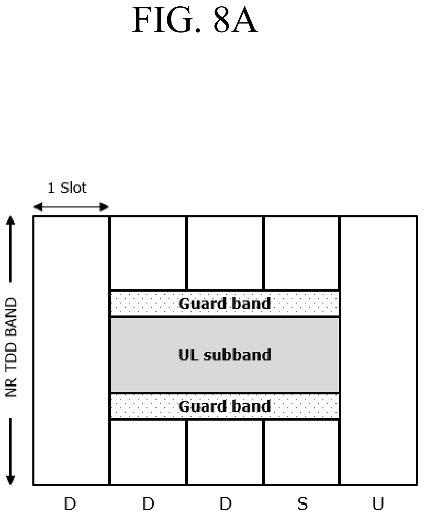

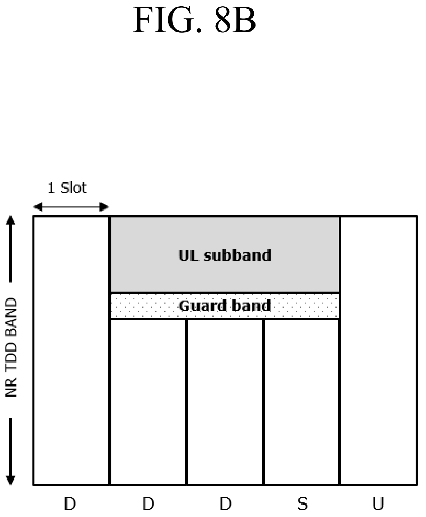

**FIGS. 8A** **and** **8B** **are diagrams illustrating examples of configuring an uplink (UL) subband in a downlink (DL) slot according to an embodiment of the disclosure.**

Referring to FIGS. 8A and 8B, to support full duplex operation, an arbitrary frequency resource, i.e., a subband, may be configured to allow a transmission (Tx) direction different from the Tx direction setting (i.e., DL, UL, or flexible) set by slot configuration information. That is, as shown in FIGS. 8A to 8B, in an arbitrary DL slot or DL symbol, some frequency resources may be defined for UL transmission of a terminal or as a flexible symbol for DL/UL transition. Alternatively, in an arbitrary UL slot or UL symbol, some frequency resources may be defined to be utilized for DL transmission of the base station.

FIGS. 8A and 8B illustrate examples of configuring a UL subband to support UL transmission of a terminal in some (or all) DL slots when a TDD configuration is applied in an arbitrary NR frequency band with a 4:1 ratio of DL slots to UL slots (provided that some symbols of the last DL slot are a special slot including flexible symbols for DL/UL transition). When a UL subband is configured in an arbitrary DL slot, the UL subband may be configured in the center or at the edge of the corresponding frequency band, and a guard band may be configured between the UL subband and the DL subband in the corresponding slot.

Meanwhile, the remaining frequency resources, excluding the UL subband and the guard band, may be configured as a DL subband for DL transmission/reception according to the existing slot/symbol configuration information. As shown in FIG. 8A, when a UL subband is configured in the center of the frequency band, a total of two guard bands, one at the top and bottom, are configured on both sides of the corresponding UL subband, and similarly, two DL subbands, one at the top and one at the bottom, may also be configured. Alternatively, as shown in FIG. 8B, when a UL subband is configured at the edge of the frequency band, one guard band and one DL subband may be configured adjacent to the corresponding UL subband.

The UL-DL slot configuration defined in NR is configured on a per-cell basis through cell-specific RRC signaling. That is, a pattern of DL symbols, UL symbols, and flexible symbols with a certain period is configured via 'tdd-UL-DL-ConfigurationCommon', which is an RRC message/information for the corresponding UL-DL slot configuration. Furthermore, through 'tdd-UL-DL-ConfigurationDedicated', which is UE-specific RRC signaling, only the flexible symbols configured via the aforementioned 'tdd-UL-DL-ConfigurationCommon' can be reassigned as UL symbols, DL symbols, or flexible symbols on a per-terminal basis. Alternatively, a dynamic slot format indication method via UE-group common PDCCH has also been defined. For this, NR further supports the dynamic slot format indication method via DCI format 2_0.

According to the legacy slot configuration method described above, an arbitrary symbol can be configured or indicated as one of DL, UL, or flexible. For example, as shown in FIG. 8A, an arbitrary slot format may be configured as DDDSU through the legacy slot configuration. 'D' refers to a downlink slot, in which all OFDM symbols constituting the slot are configured as DL. 'U' refers to an uplink slot, in which all OFDM symbols constituting the slot are configured as UL. 'S' refers to a special slot including a flexible symbol for the DL/UL transition. Generally, for a normal CP, the special slot may be composed of 12 DL symbols and 2 flexible symbols out of a total of 14 symbols. Alternatively, it may be composed of 10 DL symbols, 2 flexible symbols, and 2 UL symbols. That is, within an arbitrary TDD carrier, a symbol is configured or indicated as only one of DL, UL, or flexible.

However, as shown in FIGS. 8A and 8B, when a UL subband is configured in an arbitrary DL slot, DL transmission or UL transmission may occur simultaneously for each frequency resource in the corresponding symbol. As such, a DL slot or symbol including a UL subband, or a UL slot or symbol including a DL subband, is defined as an SBFD slot or an SBFD symbol in this specification.

Furthermore, in this specification, a slot composed only of SBFD symbols is defined as an SBFD slot, and a slot composed only of symbols according to a conventional symbol configuration (i.e., a slot composed only of symbols excluding a UL subband, a DL subband, or a guard band) is defined as a non-SBFD slot.

According to the PUSCH transmission method for a terminal defined in 5G NR, the terminal supports PUSCH transmission based on dynamic scheduling via a UL grant in DCI transmitted through PDCCH by the base station, and PUSCH transmission based on an RRC configured grant. In particular, the configured grant-based PUSCH transmission includes configured grant type 1, which is defined by the higher layer parameter 'configuredGrantConfig' including 'rrc-ConfiguredUplinkGrant' without activation via a separate DCI, and configured grant type 2, which is activated via DCI according to the semi-persistent scheduling scheme defined in LTE.

Dynamic scheduling-based PUSCH transmission basically involves the transmission of DCI format for resource allocation (e.g., DCI format 0_0, 0_1, 0_2, etc.) for each PUSCH transmission on a slot or sub-slot basis, and PUSCH transmission is performed based on the resource allocation information included in the corresponding DCI format. Therefore, PUSCH transmission resource allocation in an SBFD slot composed of SBFD symbols and PUSCH transmission resource allocation in a non-SBFD slot such as a UL slot can be performed through separate DCI transmissions.

However, in the case of certain dynamic scheduling-based PUSCH transmissions, PUSCH transmission across different slot types may be triggered via a single DCI. For example, this may include cases where PUSCH repetition is configured/indicated, TB processing over multiple slots is configured/indicated, or scheduling for multiple PUSCH transmissions is performed via a single DCI.

The present disclosure proposes a method for defining a specific PUSCH transmission slot when PUSCH transmission scheduled via a single DCI is instructed to be performed over one or more slots, and the corresponding slots include both SBFD slots and non-SBFD slots. In particular, when a single DCI is used to perform multi-PUSCH scheduling for a terminal, a method for determining the slots in which the corresponding PUSCH transmissions are to be performed is proposed.

The present disclosure uses the term 'slot type' to distinguish between SBFD slots and non-SBFD slots, but the present disclosure is not limited to this specific designation.

An NR base station may transmit scheduling control information for one or more PUSCH transmissions to a corresponding terminal via a single UL grant DCI (e.g., DCI format 0_1). Specifically, the base station may configure a time domain resource allocation table in which each row includes one or more SLIVs (start and length indicator values) through the 'pusch-TimeDomainAllocationListForMultiPUSCH' RRC parameter configuration, and based on this, may allocate corresponding PUSCH transmission resources in one or more (up to 8) slots through the time domain resource assignment indication information of DCI format 0_1. The following describes the 'pusch-TimeDomainAllocationListForMultiPUSCH' configuration defined in the 3GPP TS 38.331 standard document.

### pusch-TimeDomainAllocationListForMultiPUSCH

Configuration of the time domain resource allocation (TDRA) table for multiple PUSCH (see TS 38.214 [19], clause 6.1.2). The network configures at most 16 rows in this TDRA table in PUSCH-TimeDomainResourceAllocationList-r16 configured by this field. This field is not configured simultaneously with pusch-AggregationFactor. The network does not configure the pusch-TimeDomainAllocationListForMultiPUSCH-r16 simultaneously with the pusch-TimeDomainAllocationListDCI-0-1-r16.

Table 5 below shows RRC parameters for configuring a time domain resource allocation table for multiple PUSCH transmissions.

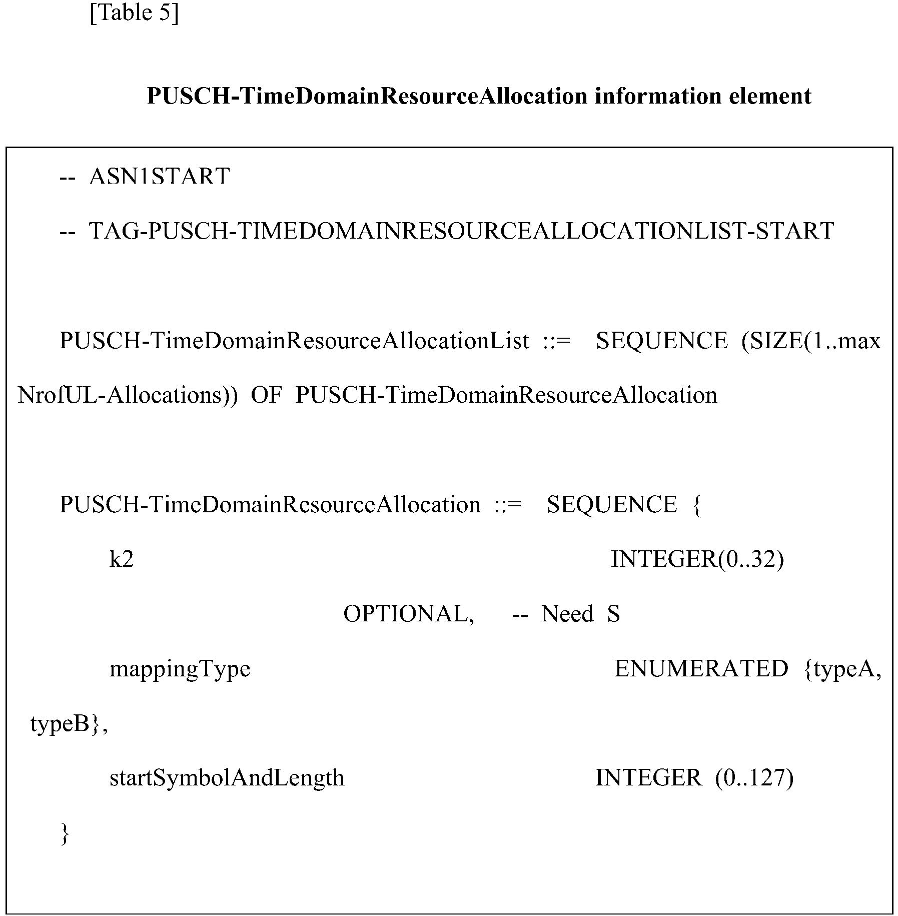

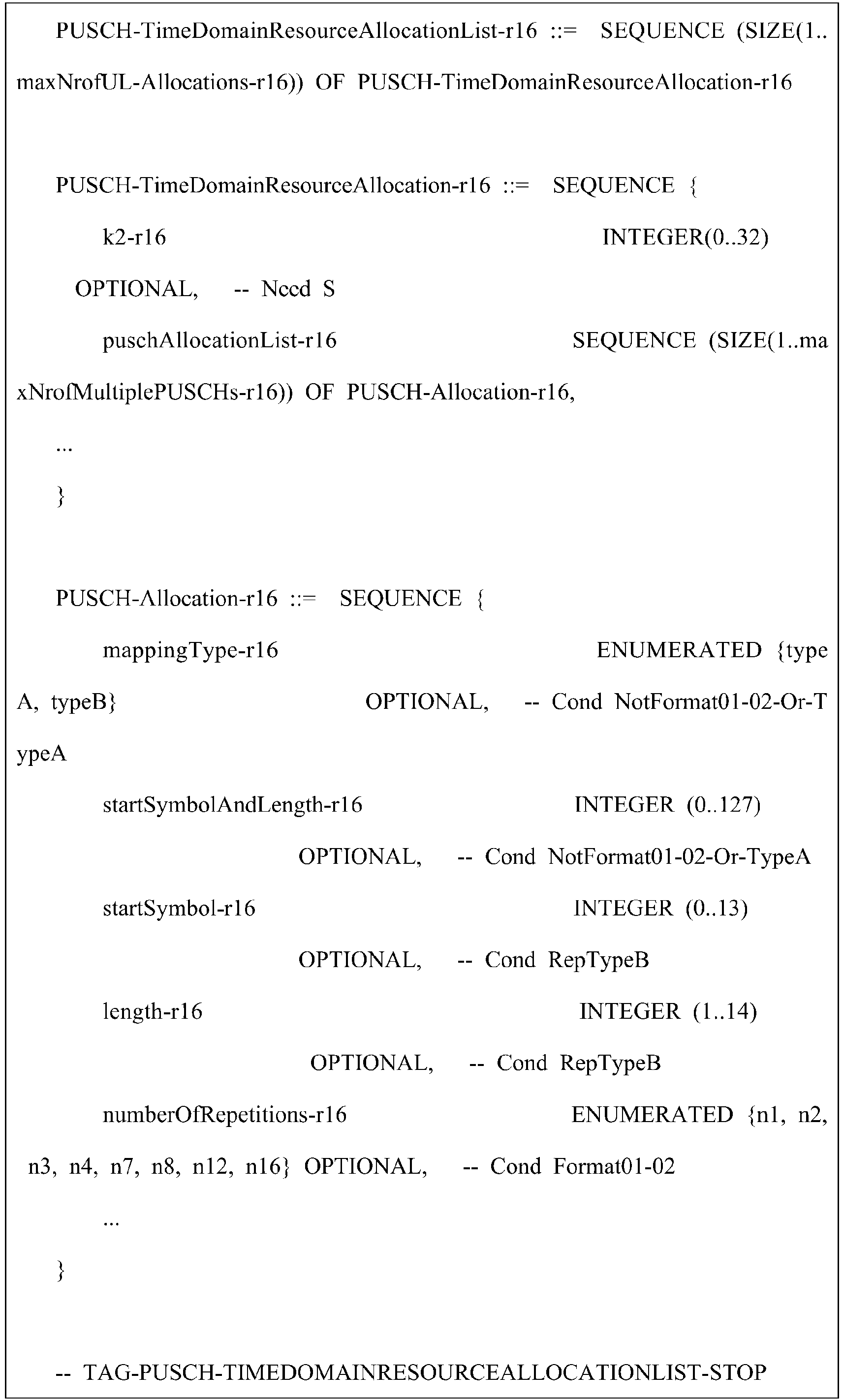

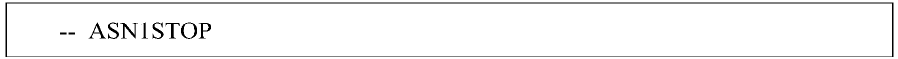

As shown in Table 5, for multiple PUSCH transmissions, a base station can configure a time domain resource allocation (TDRA) table for an arbitrary terminal by setting a K2 value, a mapping type value, and an SLIV value for each PUSCH.

Based on this, the base station can explicitly indicate slot (extendedK2) and symbol (SLIV) allocation information within the corresponding slot for one or more PUSCH transmissions via a UL grant such as DCI format 0_1. However, according to the typical PUSCH transmission method of a terminal, when scheduling for PUSCH transmission across multiple slots is performed via a single DCI format, if at least one symbol among the symbols allocated for PUSCH transmission in any one of the plurality of slots is indicated as DL by 'tdd-UL-DL-ConfigurationCommon' or 'tdd-UL-DL-ConfigurationDedicated', it is defined that the terminal does not transmit PUSCH in that slot.

Therefore, according to the existing method of multi-PUSCH scheduling, even if the terminal is capable of performing PUSCH transmission through a UL subband in a SBFD slot where a PUSCH transmission resource is allocated by the UL grant (e.g., DCI format 0_1) containing the multi-PUSCH scheduling control information, if at least one symbol allocated for PUSCH transmission according to the legacy slot configuration in that slot is configured as DL, the terminal's PUSCH transmission is not carried out. Herein, 'legacy slot configuration' refers to the slot configuration by 'tdd-UL-DL-ConfigurationCommon' or 'tdd-UL-DL-ConfigurationDedicated', or it may additionally include the dynamic slot format configuration by DCI format 2_0.

Therefore, it is necessary to define a new PUSCH transmission method based on multi-PUSCH scheduling to overcome the above limitations.

Hereinafter, various methods for solving the aforementioned problem are proposed. The methods proposed below can solve the problem when applied independently, or as a combination of one or more methods, and all such cases are included in the scope of the present disclosure.

### First scheme: extended slot format configuration

The base station may explicitly configure or indicate the transmission direction of a terminal in the corresponding slot or symbol for an arbitrary SBFD slot or an SBFD symbol. Here, the transmission direction of the terminal may be referred to by various names such as "extended slot configuration," or "extended slot format." The base station may configure or indicate whether a terminal is to perform a DL reception operation or a UL transmission operation in an SBFD symbol or slot. In one embodiment, the base station transmits UL-DL configuration information of an SBFD slot or symbol to a terminal via UE-specific or cell-specific RRC signaling. The configuration information may be configured for UL and DL of the SBFD slots or symbols based on the period information of the SBFD slot or symbol according to the UL subband configuration, and for an SBFD symbol that is not explicitly configured as UL or DL, it may implicitly be considered configured as a flexible symbol. As another method, the base station may transmit UL-DL indication information of the corresponding SBFD slot or SBFD symbol to the terminal via L1 control signaling. In this case, the UL-DL indication information in the corresponding SBFD slot or SBFD symbol may be indicated via UE-specific DCI or UE-group common DCI.

The transmission direction configuration or indication information of an SBFD slot or symbol may be included in an existing RRC signaling or DCI format, or a separate RRC signaling or DCI format may be defined.

Alternatively, the transmission direction in an arbitrary SBFD slot or symbol may be implicitly configured by the UL subband configuration information. In another embodiment, if a UL subband is configured in a DL slot/symbol or a flexible slot/symbol according to a legacy slot configuration for a terminal, the terminal implicitly perform a UL transmission operation in the corresponding SBFD slot or symbol. Conversely, if a DL subband is configured, the terminal may perform a DL reception operation in the corresponding SBFD slot or symbol.

Meanwhile, if the transmission direction for a terminal in an SBFD slot or symbol is not configured as DL, i.e., if it is configured as UL or flexible, the terminal may perform PUSCH transmission in the corresponding SBFD slot or symbol.

As another method, even for a symbol configured as DL or flexible by 'tdd-UL-DL-ConfigurationCommon' or 'tdd-UL-DL-ConfigurationDedicated', if a UL subband is configured, it may be defined as being reconfigured into a symbol allowing UL transmission according to scheduling control information from the base station to the terminal. That is, a terminal may reconfigure an arbitrary DL or flexible symbol into as an SBFD symbol capable of PUSCH or PUCCH/SRS transmission according to scheduling control information included in a DCI format transmitted by a base station.

When PUSCH transmission is indicated in an arbitrary SBFD slot according to multi-PUSCH scheduling information, the PUSCH transmission operation of the corresponding terminal in the corresponding SBFD slot will be described in detail below.

If the UL subband configuration for SBFD operation is valid in an activated UL bandwidth part (BWP), the terminal may support multi-PUSCH transmission according to multi-PUSCH scheduling including an SBFD slot containing SBFD symbols and a non-SBFD slot composed of non-SBFD symbols (specifically, including non-SBFD UL symbols or flexible symbols). Here, the case where the UL subband configuration for SBFD operation is valid for the activated UL BWP refers to a UL BWP associated with the UL subband configuration for supporting SBFD operation among one or more UL BWPs configured for the terminal, or a UL BWP in which the UL subband is configured.

In this case, the frequency allocation resource by the frequency domain resource assignment (FDRA) information area included in the DCI format transmitting the multi-PUSCH scheduling control information may be limited to belong entirely to the frequency domain of the UL subband where UL transmission is possible in an SBFD symbol. As another method, the DCI format transmitting the multi-PUSCH scheduling control information may include control information for PUSCH transmission in an SBFD symbol separate from the control information for PUSCH transmission in a non-SBFD symbol. In one embodiment, for PUSCH transmission by the multi-PUSCH scheduling DCI format, an information area such as an FDRA, a transmission configuration indicator (TCI) field for PUSCH transmission in an SBFD symbol may be further included, separate from an information area such as an FDRA, a TCI field for PUSCH transmission in a non-SBFD symbol.

Alternatively, when scheduling multiple PUSCH transmissions across different slot types, the scheduling control information may be limited and configured based on a specific slot type. In another embodiment, the configuration of the FDRA, TCI field, and other fields included in the DCI format for multi-PUSCH scheduling may be configured by the base station and interpreted by the terminal based on the UL subband, not the UL BWP, i.e., based on a 'PUSCH-config' valid in an SBFD symbol. In yet another embodiment, in configuring 'PUSCH-config', in addition to the 'PUSCH-config' for PUSCH transmission in existing non-SBFD symbols, separate 'PUSCH-config' configuration information for PUSCH transmission in SBFD symbols (e.g., separate PUSCH-config_SBFD configuration information) may be configured by the base station and transmitted to the terminal. Alternatively, some parameters included in 'PUSCH-config' may further include a configuration value for PUSCH transmission in an SBFD symbol in addition to a configuration value for PUSCH transmission in a non-SBFD symbol. Accordingly, when PUSCH transmission according to the multi-PUSCH scheduling DCI format includes both the SBFD slot and the non-SBFD slot, the control information included in the DCI format may be indicated based on the 'PUSCH-config' configuration information of a specific slot type. For example, it may be limited to be indicated based on the 'PUSCH-config' configuration information for an SBFD symbol.

As such, in order for PUSCH transmission according to multi-PUSCH scheduling to be performed in both the non-SBFD slot and the SBFD slot, the terminal may perform PUSCH transmission according to the symbol configuration as described below.

When scheduling for PUSCH transmission across multiple slots is performed for a terminal via a single DCI format, if, for any one of the plurality of slots, at least one of the symbols allocated for PUSCH transmission in that slot is a non-SBFD symbol indicated as DL by 'tdd-UL-DL-ConfigurationCommon' or 'tdd-UL-DL-ConfigurationDedicated', or if at least one symbol is an SBFD symbol indicated as DL by a UE-specific or cell-specific extended slot configuration, it is defined that PUSCH is not transmitted in that slot.

That is, when scheduling for PUSCH transmission across multiple slots is performed for a terminal via a single DCI format, if, for any one of the plurality of slots, at least one of the symbols allocated for PUSCH transmission in that slot is a symbol indicated as DL by 'tdd-UL-DL-ConfigurationCommon' or 'tdd-UL-DL-ConfigurationDedicated' without a UL subband configuration, or if a UL subband is configured but the terminal is instructed by the base station to perform a DL reception operation in that symbol, the terminal is defined not to transmit PUSCH in that slot.

Alternatively, all SBFD symbols for which a UL subband is configured may be implicitly reconfigured as symbols capable of UL transmission at the terminal. In this case, if multi-PUSCH transmission is indicated for a terminal via a single DCI format, and if at least one symbol among the symbols allocated for PUSCH transmission in any one of the slots where the plurality of PUSCH transmissions occur (or, if at least one symbol among the symbols where any one PUSCH transmission among the plurality of PUSCHs occurs) is configured as DL by 'tdd-UL-DL-ConfigurationCommon' or 'tdd-UL-DL-ConfigurationDedicated', and no UL subband is configured in that symbol, the terminal may omit the corresponding PUSCH transmission.

For cases other than those described above, it is defined that the terminal performs PUSCH transmission in an arbitrary SBFD slot according to the multi-PUSCH scheduling information. That is, when scheduling for PUSCH transmission across multiple slots is performed for a terminal via a single DCI format, even if at least one of the symbols allocated for PUSCH transmission in any one of the plurality of slots is indicated as DL by 'tdd-UL-DL-ConfigurationCommon' or 'tdd-UL-DL-ConfigurationDedicated', if the at least one symbol includes a UL subband (i.e., is an SBFD symbol) and the terminal is explicitly or implicitly configured/indicated/instructed by or indicated through the base station to perform a UL transmission operation in that symbol, it is defined that the terminal performs PUSCH transmission in that slot.

### Second scheme: Setting limits on PUSCH transmission via different slot types

Even for cases where PUSCH transmission according to multi-PUSCH scheduling is possible based on the transmission direction configuration or indication information for a terminal in an SBFD slot or symbol, the base station may additionally explicitly or implicitly configure or indicate whether to perform PUSCH transmission according to multi-PUSCH scheduling for each slot type.

In one embodiment, the configuration information may be defined to be semi-statically configured and transmitted from the base station to the terminal via RRC signaling. That is, when multi-PUSCH scheduling across multiple slots is triggered by the base station for a terminal, and the slots configured or indicated for the terminal's UL transmission include SBFD slots and non-SBFD slots, it is defined that the base station configures whether to support the terminal's PUSCH transmission through the different slot types. That is, the base station may configure via UE-specific or cell-specific RRC signaling to limit PUSCH transmission according to multi-PUSCH scheduling for a terminal to SBFD slots or non-SBFD slots. For example, PUSCH transmission according to multi-PUSCH scheduling may be limited to non-SBFD slots, and in this case, whether to perform PUSCH transmission in an arbitrary slot according to multi-PUSCH scheduling follows the existing PUSCH transmission determination method. That is, when scheduling for PUSCH transmission across multiple slots is performed for a terminal by one DCI format, if at least one of the symbols allocated for PUSCH transmission in any one of the plurality of slots is indicated as DL by 'tdd-UL-DL-ConfigurationCommon' or 'tdd-UL-DL-ConfigurationDedicated', the terminal may does not transmit PUSCH in that slot according to the existing operation.

As another explicit method, it is defined that the base station may dynamically indicate whether to support transmission through different slot types for PUSCH transmission according to multi-PUSCH scheduling via L1 control signaling. In one embodiment, the base station may include the indication information in a DCI format for UL grant transmission (e.g., DCI format 0_0, 0_1, 0_2, etc.). That is, when the base station indicates PUSCH transmission according to multi-PUSCH scheduling to a terminal via a UL grant, it is defined that the base station dynamically indicates in the UL grant whether to support PUSCH transmission through different slot types or whether to limit PUSCH transmission under multi-PUSCH scheduling to a specific slot type. Alternatively, the indication information is defined as being provided to specific terminals via UE-group common DCI.

Furthermore, various combinations of the explicit signaling methods described above may also be included in the present disclosure. In one embodiment, an indication information area for whether to support different slot types or whether to limit the slot type is configured for a specific DCI format for a terminal (e.g., DCI format 0_1, 0_2 for UL grant transmission or UE-group common DCI format) via RRC signaling, and if the DCI format is configured to include the indication information area, it is defined that the base station dynamically indicate whether to support different slot types or whether to limit the slot type for PUSCH transmission according to multi-PUSCH scheduling through this.

As described above, when multi-PUSCH transmission is indicated for a terminal by a base station, valid slot type configuration/indication information for the multi-PUSCH transmission may be transmitted to the terminal via explicit RRC signaling or L1 control signaling.

Hereinafter, an implicit configuration/indication method is described.

In one embodiment, it may be determined based on whether the frequency resources of the UL BWP activated for the terminal and the frequency resources of the UL subband configured by the base station. That is, itis defined that whether to support PUSCH repetition transmission through different slot types is determined by whether the active UL BWP and the UL subband fully or partially overlap on the frequency axis or are non-overlapping. At this time, the target of the overlap determination may be the frequency resources of the active UL BWP. That is, if the frequency resources of the UL BWP activated for a terminal fully fall within the UL subband, it is defined that the terminal supports different slot type-based transmission for PUSCH transmission according to multi-PUSCH scheduling. On the other hand, in the case of partial overlap or non-overlap, it is defined that the terminal does not support different type-based transmission for PUSCH repetition transmission.

Alternatively, the target of the frequency resource overlap determination may be the UL subband. That is, if the frequency resources of the UL subband for a terminal fully belong to the activated UL BWP, it is defined that the terminal supports different slot type-based transmission for PUSCH transmission according to multi-PUSCH scheduling. On the other hand, in the case of partial overlap or non-overlap, it is defined that the terminal does not support different slot type-based transmission for PUSCH transmission according to multi-PUSCH scheduling.

As another method, it may be implicitly determined based on whether the frequency resources allocated by the frequency domain resource assignment information area, i.e., the frequency domain resource allocation information included in the DCI format, i.e., the UL grant for PUSCH transmission, include a UL subband. In this method, if the frequency resources according to the frequency domain resource allocation information for PUSCH transmission under multi-PUSCH scheduling fully fall within the UL subband, different slot type-based transmission is defined as being supported, and otherwise, it is defined as not being supported (i.e., transmission is performed only for the same slot type). However, if intra-slot or inter-slot frequency hopping is configured, it may be limited to the case where the frequency resources of each frequency hop all fall within the UL subband, or this scheme may be limited to application when frequency hopping is not configured.

As another method, it may be determined based on the slot type of the first slot in which PUSCH transmission under multi-PUSCH scheduling starts whether to support PUSCH transmission through different slot types. In one embodiment, if PUSCH transmission under multi-PUSCH scheduling is configured/indicated for PUSCH transmission and the slot in which the first PUSCH transmission occurs according to the time domain resource assignment information is an SBFD slot, it is defined that the corresponding PUSCH transmission may also be performed through a non-SBFD slot. On the other hand, in the opposite case, i.e., if PUSCH transmission under multi-PUSCH scheduling is configured/indicated for PUSCH transmission and the slot in which the corresponding PUSCH transmission starts according to the time domain resource assignment information is a non-SBFD slot, it is defined that the corresponding PUSCH transmission is limited to a non-SBFD slot. (Alternatively, it is defined that when a non-SBFD slot is the starting slot, transmission through different slot types is supported, and if an SBFD slot is the starting slot, transmission is limited to an SBFD slot.)

Furthermore, various combinations of the implicit configuration methods may also be included in the present disclosure. In one embodiment, if the slot in which the first PUSCH transmission under multi-PUSCH scheduling occurs is an SBFD slot, the PUSCH transmission is defined as supporting transmission across different slot types (i.e., transmission may also be performed through a non-SBFD slot). On the other hand, if the starting slot is a non-SBFD slot, it is additionally determined whether the frequency resources allocated for the PUSCH transmission fully overlap with the UL subband, and if they fully overlap, transmission across different slot types is defined as being supported (i.e., transmission may also be performed through an SBFD slot), and otherwise (i.e., partially overlap or non-overlap), transmission across different slot types is defined as not being supported (i.e., the PUSCH transmission is limited to a non-SBFD slot).

Whether to support PUSCH transmission in different slot types by the aforementioned explicit or implicit configuration/indication method may be limited to a specific slot type. For example, in the case of a non-SBFD slot, PUSCH transmission is defined as being supported if it is not configured as DL according to the legacy slot configuration, and additionally, whether to support PUSCH transmission only in a specific SBFD slot is defined as being determined by the aforementioned explicit or implicit method.

Furthermore, a combination of the aforementioned explicit configuration/indication method and implicit configuration/indication method may also be included in the scope of the present disclosure. For example, even if it is explicitly instructed by or indicated through the base station to support multi-PUSCH transmission through different slot types (or, explicitly instructed or indicated by the base station to perform PUSCH transmission according to multi-PUSCH scheduling in an SBFD slot), if the frequency resource allocation information for PUSCH transmission does not completely fall within the corresponding UL subband, PUSCH transmission through the corresponding SBFD slot is defined as not being performed.

Furthermore, when PUSCH transmission in an SBFD slot is configured/indicated to be supported according to the aforementioned methods, a new rule for association (or mapping) between a UL subband and a UL BWP (between frequency resources of an SBFD slot and a non-SBFD slot) may be configured or defined so that UL subband physical resource block (PRB) resources in the SBFD slot based on the frequency resource allocation information for the corresponding PUSCH transmission are always established.

As a method for this, a frequency domain resource set for mapping PRBs in a terminal's UL BWP to PRBs of a UL subband may be configured. Accordingly, association/mapping is performed between the PRBs of the configured resource set and the PRBs constituting the UL subband, or between the overlapping PRBs of the UL subband and the UL BWP. At this time, only one such resource set may be configured for the UL BWP, or one or more resource sets may be configured so that all frequency resources of the UL BWP, i.e., PRBs, fall within at least one resource set. If one or more resource sets are configured, association/mapping is performed between the PRBs of each resource set and the PRBs constituting the UL subband, or between the overlapping PRBs of the UL subband and the UL BWP. The resource set configuration information may include starting resource block (RB) information and size information on the frequency axis, or may include only the starting RB information, and the size information may be determined by the size of the UL subband or the size of the overlapping frequency resources between the UL subband and the UL BWP.

The foregoing examples have been described based on slots on the time axis, but the content can be equally applied to various time resource units such as symbols, subframes, and frames.

Hereinafter, the PUSCH transmission method of a terminal according to the aforementioned methods is described in detail.

A terminal receives cell-specific and/or UE-specific TDD configuration information for uplink transmission and downlink reception from a base station. Furthermore, the terminal additionally receives UL subband and DL subband configuration information (or guard band configuration information) to support SBFD operation. The terminal may determine symbols and slots capable of UL transmission based on the TDD configuration information together with the UL subband, DL subband, and guard band configuration information.

Symbols and slots capable of UL transmission may be symbols not configured as DL according to the TDD configuration and slots composed of the corresponding symbols. Additionally, symbols and slots capable of UL transmission may be SBFD symbols for which a UL subband is configured among symbols configured as DL according to the TDD configuration. However, for a terminal, a symbol capable of UL transmission through a UL subband among SBFD symbols may be explicitly indicated.

When a terminal receives a DCI format including multi-PUSCH scheduling control information from a base station, it receives symbol allocation information indicating the occurrence of each PUSCH transmission based on the TDRA information included in the DCI format.

At this time, PUSCH transmission according to multi-PUSCH scheduling may be limited to the same symbol type. That is, each of the symbols allocated for each PUSCH transmission according to multi-PUSCH scheduling may be limited to be either all non-SBFD symbols or all SBFD symbols. That is, for one or more PUSCH transmissions based on a multi-PUSCH scheduling DCI format, the terminal is not expected to receive scheduling in which the symbols for each PUSCH transmission includes both non-SBFD symbols and SBFD symbols. The symbol type in which PUSCH transmission by the multi-PUSCH scheduling DCI format occurs may be determined by the symbol type of the first PUSCH transmission by the corresponding DCI format. Alternatively, the symbol type configuration information may be included in the DCI format, or it may be determined by the symbol type of the corresponding DCI format transmission.

Accordingly, the terminal may determine a common invalid symbol and a symbol type-specific invalid symbol for each PUSCH transmission according to the multi-PUSCH DCI format. The common invalid symbol includes a non-SBFD symbol configured as DL according to the TDD configuration information, i.e., a DL symbol without a UL subband configuration. Furthermore, the common invalid symbol may further include symbols among the SBFD symbols with a UL subband configuration, those explicitly configured by the base station for DL reception.

In addition to the common invalid symbol, a symbol type-specific invalid symbol may be determined. The symbol type-specific invalid symbol may be determined for each PUSCH transmission symbol type according to multi-PUSCH scheduling. In one embodiment, if the symbol type for one or more PUSCH transmissions under multi-PUSCH scheduling is determined as a non-SBFD symbol, all SBFD symbols may be determined as invalid symbols. In another embodiment, if the symbol type for at least one PUSCH transmission under multi-PUSCH scheduling is determined as an SBFD symbol, all non-SBFD symbols including symbols configured as UL according to the TDD configuration or symbols among flexible symbols without a UL subband configuration, may be determined as invalid symbols. Accordingly, when a terminal receives a multi-PUSCH DCI format and performs PUSCH transmission, if the PUSCH transmission includes at least one invalid symbol among the common invalid symbol and the symbol type-specific invalid symbol, the terminal may drop/skip/omit the corresponding PUSCH transmission.

In another embodiment, PUSCH transmission according to multi-PUSCH scheduling through different symbol types may be supported. At this time, whether to support multi-PUSCH scheduling through different symbol types may be explicitly configured by the base station or implicitly determined by the symbol type in which the first PUSCH transmission occurs or the overlap between the PUSCH transmission frequency resource allocation information by FDRA and the UL subband frequency resources. As such, when PUSCH transmission according to multi-PUSCH scheduling through different symbol types is supported, if an arbitrary PUSCH transmission includes a common invalid symbol during PUSCH transmission upon receiving a DCI format including the multi-PUSCH scheduling information, the corresponding PUSCH transmission may be dropped/skipped/omitted.

Furthermore, when multi-PUSCH transmission through different symbol types is supported according to some of the aforementioned methods or a combination thereof, a separate DCI format (e.g., DCI format 0_x) for the multi-PUSCH scheduling may be newly defined. In this case, the information field of the DCI format may be divided into a slot type common information area and a slot type specific information area. The slot type common information area may be commonly configured for and applied to PUSCH transmission in a non-SBFD slot and PUSCH transmission in an SBFD slot, and includes a single configuration value in the DCI format. For example, the TDRA information area may be a slot type common information area and is represented as a single information area as in the typical method. On the other hand, the slot type specific information area may be separately configured for and applied to PUSCH transmission in a non-SBFD slot and PUSCH transmission in an SBFD slot, and the same information area may have a configuration value for a non-SBFD slot and a separate configuration value for an SBFD slot, respectively. For example, FDRA, TCI field, etc. may be a slot type specific information area. Regardless of the foregoing example, in configuring DCI format 0_x, a combination in which a specific information area is commonly applied to slot types through a configuration value and other information areas are separately configured for each slot type may also be included in the scope of the present invention.

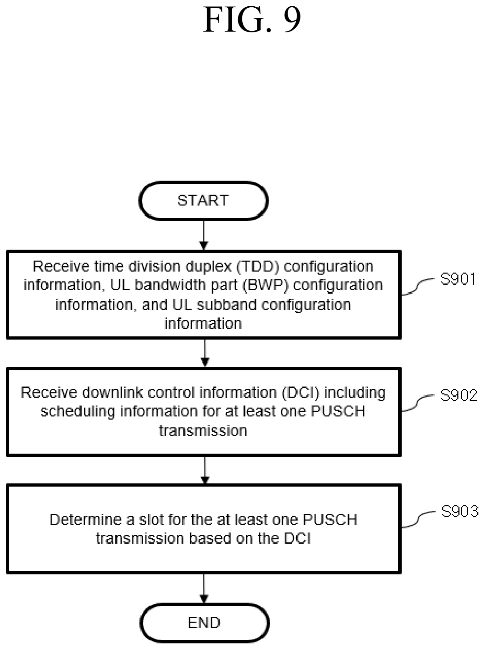

**FIG. 9** **is a flowchart illustrating an operation method of a terminal according to an embodiment.**

Referring to FIG. 9, a terminal receives TDD (time duplex division) configuration information, UL BWP (bandwidth part) configuration information, and UL subband configuration information from a base station (S901). In addition, the terminal receives DCI (downlink control information) including scheduling information for at least one PUSCH transmission from the base station (S902). Then, the terminal determines a slot for the at least one PUSCH transmission based on the received DCI (S903). Here, the slot for the at least one PUSCH transmission is determined by whether an invalid symbol is included within a slot according to the scheduling information included in the DCI, and the invalid symbol is determined based on subband full duplex (SBFD) symbol information from the TDD configuration information and the UL subband configuration information associated with the UL BWP.

A PUSCH transmission may not be performed in a slot that includes the invalid symbol.

Meanwhile, the invalid symbol may include a non-SBFD symbol among the downlink (DL) symbols according to the TDD configuration information that do not have a UL subband configuration.

In another aspect, the invalid symbol may include a symbol among the downlink (DL) symbols according to the TDD configuration information with a UL subband configuration, that is explicitly indicated or configured for DL reception by the base station.

In another aspect, the invalid symbol includes: i) a non-SBFD symbol among the downlink (DL) symbols according to the TDD configuration information, and ii) a symbol among the downlink (DL) symbols according to the TDD configuration information that is explicitly indicated or configured for DL reception by the base station. A symbol not included in the invalid symbol is defined as a valid PUSCH transmission symbol.

In another aspect, the invalid symbol may refer to all non-SBFD symbols to all SBFD symbols without a UL subband configuration, or all SBFD symbols with a UL subband configuration. Here, whether PUSCH transmission is performed for the non-SBFD symbol and/or the SBFD symbol may be: i) determined based on an indication in the DCI, ii) determined by a symbol type of a first PUSCH transmission indicated in the DCI, or iii) determined by a symbol type of the DCI transmission.

The DCI may have a format including: i) a scheduling information area for a slot type composed of SBFD symbols, ii) a scheduling information area for a slot type composed of non-SBFD symbols, and iii) a slot type common information area.

The embodiments in this disclosure may be applied independently or may operate in combination in any form. Furthermore, although this disclosure has been described with reference to a 5G NR system, all cases in which the concepts of this disclosure are applied, regardless of the specific wireless communication technology, may be included in the scope of this disclosure.

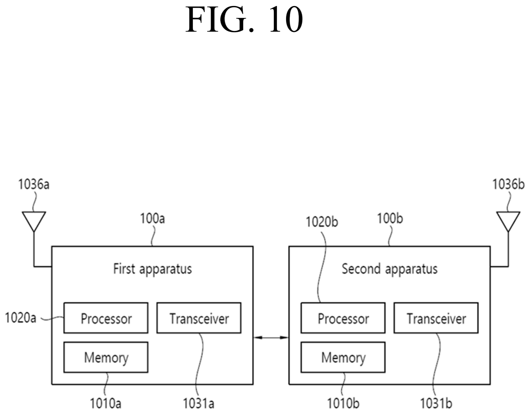

**FIG. 10** **shows apparatuses according to an embodiment of the disclosure.**

Referring to FIG. 10, a wireless communication system may include a first apparatus 100a and a second apparatus 100b.

The first apparatus 100a may include a base station, a network node, a transmission user equipment (UE), a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

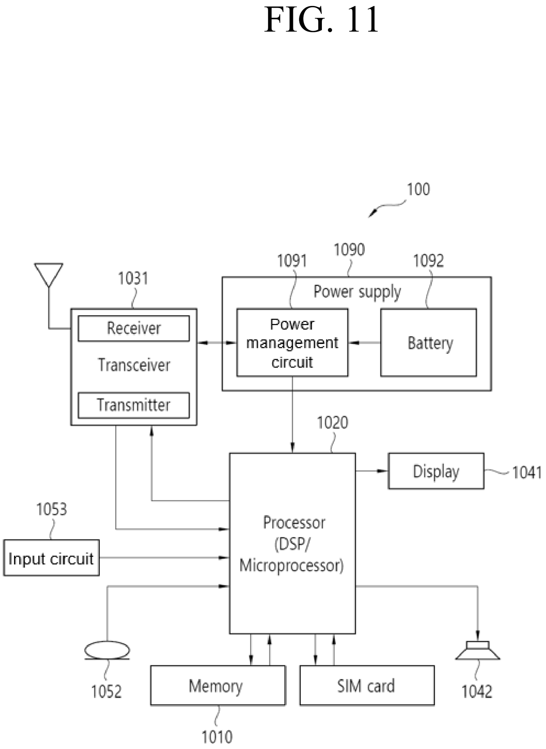

**FIG. 11** **is a block diagram showing a configuration of a terminal according to an embodiment of the disclosure.**

In particular, FIG. 11 illustrates the foregoing apparatus of FIG. 10 in more detail.

The apparatus includes a memory 1010, a processor 1020, a transceiver 1031, a power management circuit 1091, a battery 1092, a display 1041, an input circuit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management circuit 1091 manages a power for the processor 1020 and/or the transceiver 1031. The battery 1092 supplies power to the power management module 1091. The display 1041 outputs the result processed by the processor 1020. The input circuit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

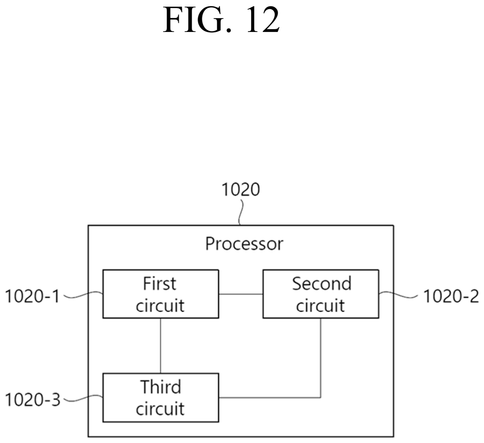

**FIG. 12** **is a configuration block diagram of a processor in which the disclosure is implemented.**

Referring to FIG. 12, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP). The processor 1020 may include at least one of a digital signal processor (DSP), a central processing unit (CPU), and a graphics processing unit (GPU).

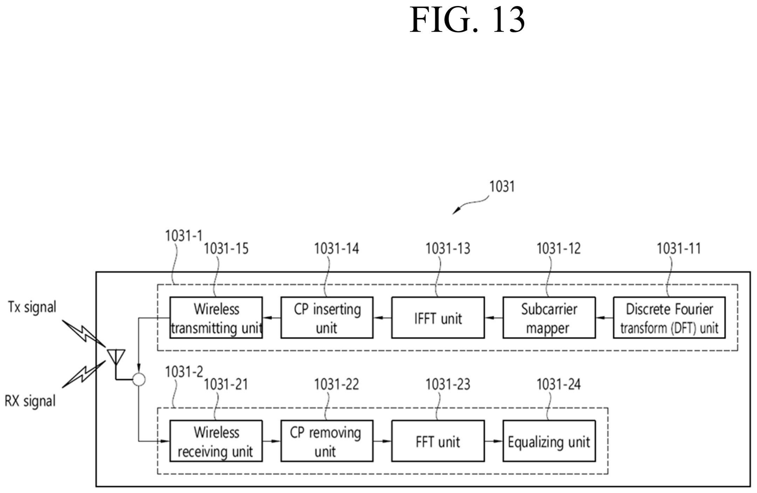

**FIG. 13** **is a detailed block diagram of a transceiver of a first apparatus shown in** **FIG. 10** **or a transceiving unit of an apparatus shown in** **FIG. 11****.**

Referring to FIG. 13, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method for a terminal to perform an operation for a physical uplink shared channel (PUSCH) transmission in a wireless communication system, the method comprising:
receiving time division duplex (TDD) configuration information, UL bandwidth part (BWP) configuration information, and UL subband configuration information;
receiving downlink control information (DCI) including scheduling information for at least one PUSCH transmission; and
determining a slot for the at least one PUSCH transmission based on the DCI,
wherein the slot for the at least one PUSCH transmission is determined by whether an invalid symbol is included within a slot according to the scheduling information included in the DCI, and
wherein the invalid symbol is determined based on subband full duplex (SBFD) symbol information from the TDD configuration information and the UL subband configuration information associated with UL BWP.

2. The method of claim 1, wherein a PUSCH transmission is not performed in the slot including the invalid symbol.

3. The method of claim 1, wherein the invalid symbol comprises a non-SBFD symbol among downlink (DL) symbols according to the TDD configuration information, for which no UL subband is configured.

4. The method of claim 1, wherein the invalid symbol comprises a symbol, among downlink (DL) symbols according to the TDD configuration information for which a UL subband is configured, that is indicated and/or configured for DL reception by a base station.

5. The method of claim 1, wherein the invalid symbol comprises i) a non-SBFD symbol among downlink (DL) symbols according to the TDD configuration information, for which no UL subband is configured, and ii) a symbol, among downlink (DL) symbols according to the TDD configuration information for which a UL subband is configured, that is indicated and/or configured for DL reception by a base station, and
wherein a symbol not included in the invalid symbol is a valid PUSCH transmission symbol.

6. The method of claim 1, wherein the invalid symbol refers to all non-SBFD symbols for which no UL subband is configured, or all SBFD symbols for which the UL subband is configured.

7. The method of claim 6, wherein whether a PUSCH transmission is performed for the non-SBFD symbol and/or the SBFD symbol is:
i) determined based on an indication through the DCI,
ii) determined by a symbol type of a first PUSCH transmission by the DCI, or
iii) determined by a symbol type in which the DCI is transmitted.

8. The method of claim 1, wherein the DCI has a format including i) a scheduling information area in a slot type comprised of SBFD symbols, ii) a scheduling information area in a slot type comprised of non-SBFD symbols and iii) a slot type common information area.

9. A communication apparatus in a wireless communication system, the communication apparatus comprising:
at least one processor; and
at least one memory configured to store instructions and be operably electrically connectable to the at least one processor, wherein operations performed based on the instructions executed by the at least one processor comprise:
receiving time division duplex (TDD) configuration information, UL bandwidth part (BWP) configuration information, and UL subband configuration information;
receiving downlink control information (DCI) including scheduling information for at least one PUSCH transmission; and
determining a slot for the at least one PUSCH transmission based on the DCI,
wherein the slot for the at least one PUSCH transmission is determined by whether an invalid symbol is included within a slot according to the scheduling information included in the DCI, and
wherein the invalid symbol is determined based on subband full duplex (SBFD) symbol information from the TDD configuration information and the UL subband configuration information associated with UL BWP.

10. The communication apparatus of claim 9, wherein a PUSCH transmission is not performed in the slot including the invalid symbol.

11. The communication apparatus of claim 9, wherein the invalid symbol comprises a non-SBFD symbol among downlink (DL) symbols according to the TDD configuration information, for which no UL subband is configured.

12. The communication apparatus of claim 9, wherein the invalid symbol comprises a symbol, among downlink (DL) symbols according to the TDD configuration information for which a UL subband is configured, that is indicated and/or configured for DL reception by a base station.

13. The communication apparatus of claim 9, wherein the invalid symbol comprises i) a non-SBFD symbol among downlink (DL) symbols according to the TDD configuration information, for which no UL subband is configured, and ii) a symbol, among downlink (DL) symbols according to the TDD configuration information for which a UL subband is configured, that is indicated and/or configured for DL reception by a base station,
and wherein a symbol not included in the invalid symbol is a valid PUSCH transmission symbol.

14. The communication apparatus of claim 9, wherein the invalid symbol refers to all non-SBFD symbols for which no UL subband is configured, or all SBFD symbols for which the UL subband is configured.

15. The communication apparatus of claim 14, wherein whether a PUSCH transmission is performed for the non-SBFD symbol and/or the SBFD symbol is:
i) determined based on an indication through the DCI,
ii) determined by a symbol type of a first PUSCH transmission by the DCI, or
iii) determined by a symbol type in which the DCI is transmitted.

16. The communication device of claim 9, wherein the DCI has a format including i) a scheduling information area in a slot type composed of SBFD symbols, ii) a scheduling information area in a slot type composed of non-SBFD symbols and iii) a slot type common information area.
